(19) Europäisches Patentamt / European Patent Office / Office européen des brevets

(11) **EP 1 719 378 B1**

(12) **EUROPEAN PATENT SPECIFICATION**

(45) Date of publication and mention
of the grant of the patent:
**11.05.2011 Bulletin 2011/19**

(21) Application number: **05708167.1**

(22) Date of filing: **10.02.2005**

(51) Int Cl.:
*H04W 72/04* (2009.01)

(86) International application number:
**PCT/FI2005/000087**

(87) International publication number:
**WO 2005/079094 (25.08.2005 Gazette 2005/34)**

(54) **METHOD, APPARATUS AND COMPUTER PROGRAM FOR ALLOCATING RADIO RESOURCES WITHIN THE REUSE DISTANCE IN A TDMA CELLULAR TELECOMMUNICATIONS SYSTEM**

VERFAHREN, VORRICHTUNG UND COMPUTERPROGRAMM ZUM ZUTEILEN VON FUNKBETRIEBSMITTELN INNERHALB DES WIEDERVERWENDUNGSABSTANDES IN EINEM ZELLULAREN TDMA-TELEKOMMUNIKATIONSSYSTEMEN

PROCEDE, APPAREIL ET PROGRAMME D'ORDINATEUR DESTINES A ATTRIBUER DES RESSOURCES RADIO DANS LA DISTANCE DE REUTILISATION D'UN SYSTEME DE TELECOMMUNICATIONS CELLULAIRE AMRT

(84) Designated Contracting States:
**AT BE BG CH CY CZ DE DK EE ES FI FR GB GR HU IE IS IT LI LT LU MC NL PL PT RO SE SI SK TR**

(30) Priority: **12.02.2004 FI 20040216**
**07.04.2004 US 819346**

(43) Date of publication of application:
**08.11.2006 Bulletin 2006/45**

(73) Proprietor: **Nokia Siemens Networks Oy**
**02610 Espoo (FI)**

(72) Inventor: **PIIRAINEN, Olli**
**FI-90100 Oulu (FI)**

(74) Representative: **Bruglachner, Thomas E.**
**Nokia Siemens Networks GmbH & Co. KG**
**CEF CTO IPR / Patent Administration**
**80240 Munich (DE)**

(56) References cited:
**EP-A1- 1 343 282     WO-A1-02/39774**
**WO-A1-03/077579     WO-A2-2004/006603**
**GB-A- 2 393 612     US-A1- 2004 038 681**

## Description

### Field

The invention relates to a method of allocating radio resources in a cellular telecommunications system, an apparatus for allocating radio resources in a cellular telecommunications system, and a computer program for allocating radio resources in a cellular telecommunications system.

### Background

Frequency planning plays a key role when considering the performance of a TDMA (Time Division Multiple Access) cellular telecommunications system. The frequency planning typically defines the radio frequency bands to be allocated to radio cells and aims at providing radio links with a minimum interference level between them. The minimum interference level is typically obtained by assigning cell-specific radio frequency bands to the radio cells such that the radio frequency bands of the proximity cells are separated from each other.

The performance of the TDMA cellular telecommunications system may be considerably improved by utilizing spatial diversity, which is typically achieved by applying multi-antenna arrays in radio signal transfer between the infrastructure and mobile stations. However, taking the spatial diversity into account complicates the frequency planning since more degrees of freedom contributing to the link performance are introduced. Therefore, it is useful to consider improvements for allocating radio resources when spatial diversity is applied.

WO 2004/006603 discloses a method for uplink resource allocation. WO 02/39774 discloses a method for allocating radio resources to mobile stations, telecommunications network and mobile station.

### Brief description of the invention

An object of the invention is to provide an improved method, apparatus and computer program for allocating radio resources in a TDMA cellular telecommunications system.

According to an aspect of the invention, there is provided a method according to claim 1.

According to a second aspect of the invention, there is provided a computer program according to claim 11.

According to third aspect of the invention, there is provided an apparatus according to claim 6.

Preferred embodiments of the invention are described in the dependent claims.

The method, apparatus and computer program of the invention provide several advantages. In a preferred embodiment of the invention, the invention provides a frequency reuse capability for radio cells located within a reuse distance from each other. The frequency reuse capability, for example, increases the maximum capacity at the link and system level, increases the coverage of a base transceiver station, and increases the cost-efficiency of the use of the infrastructure of the TDMA cellular telecommunications system.

### List of drawings

In the following, the invention will be described in greater detail with reference to the preferred embodiments and the accompanying drawings, in which

Figure 1A shows a first example of the structure of a TDMA cellular telecommunications system;
Figure 1B shows an example of the allocation of radio frequency bands to radio cells according to prior art;
Figure 2 shows a second example of the structure of a TDMA cellular telecommunications system;
Figure 3 illustrates a first example of the allocation of radio frequency bands to radio cells according to embodiments of the invention;
Figure 4 illustrates an example of a radio cell structure;
Figure 5 illustrates a second example of the allocation of radio frequency bands to radio cells according to embodiments of the invention;
Figure 6 illustrates another example of the allocation of radio frequency bands to radio cells according to embodiments of the invention, and
Figure 7 shows an example of methodology according to embodiments of the invention with a flow chart presentation.

### Description of embodiments

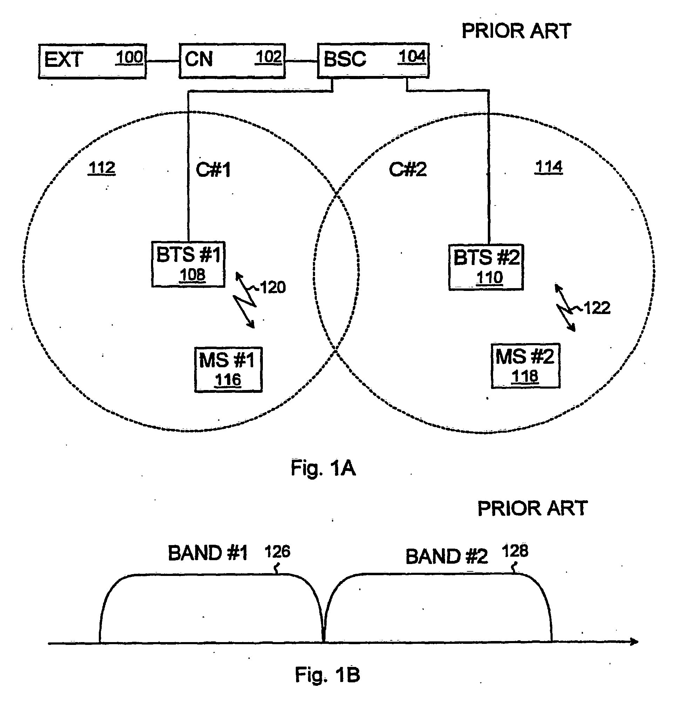

With reference to Figure 1A, an example of the structure of a TDMA (Time Division Multiple Access) cellular telecommunications system is shown.

The TDMA cellular telecommunications system may include, for example, a GSM (Global System for Mobile Communications) system, a GSM/EDGE (GSM/Enhanced Data Rates for Global Evolution) system, a GPRS (General Packet Radio Service) system, an E-GPRS (EDGE GPRS) system, or a US-TDMA (US Time Division Multiple Access) system. For the ease of discussion, preferred embodiments of the invention will be described in terms of the GSM system without limiting the scope of the invention to the GSM system, as will be obvious to one skilled in the art.

The TDMA cellular telecommunications system according to the example includes a core network (CN) 102, a base station controller (BSC) 104, external networks (EXT) 100 connected to the core network 102, base transceiver stations (BTS#1, BTS#2) 108, 110, and mobile stations (MS#1, MS#2) 116, 118.

The core network 102 may include a circuit-switched domain for managing circuit-switched traffic between the mobile stations 116, 118 within the same telecommunications system and/or between the mobile station 116, 118 and the external networks 100. In such a case, the external networks 100 may include a public land mobile network (PLMN) or a public switched telephone network (PSTN), for example.

The core network 102 may include a packet-switched domain for managing packet-switched traffic between the mobile stations 116, 118 within the same telecommunications system and/or between the mobile station 116, 118 and the external networks 100. In such a case, the external networks 100 may include the Internet, for example.

The detailed structure of the core network 102 is known to one skilled in the art and will be described when relevant to the present invention.

The base transceiver station 108, 110 provides the transceiver functions of the infrastructure of the TDMA cellular telecommunications system. The tasks of the base transceiver station 108, 110 include, for example: calculation of timing advance (TA), uplink measurements, channel coding, encryption, decryption, frequency hopping, and an interference cancellation means. The base station controller may include a computer for executing computer processes, memory for storing data and computer programs, and a user interface. The detailed structure of the base transceiver station 108, 110 is known to one skilled in the art and will be described when relevant to the present invention.

The base station controller 104 controls the base transceiver stations 108, 110 and typically performs the following tasks: radio resource management of the base transceiver stations 108, 110, inter-cell handovers, frequency control, i.e. radio frequency band allocation to the base transceiver stations 108, 110 and mobile stations 116, 118, management of frequency hopping sequences, time delay measurement on the uplink, implementation of the operation and maintenance interface, and power control.

The mobile station 116, 118 comprises a radio modem for communicating with the base transceiver station 108, 110 over the radio link 120, 122.

The mobile station 116, 118 may further comprise an identity module for identifying the mobile station 116, 118 in the telecommunications system. The mobile station 116, 118 may further include an antenna, a user interface, an interference cancellation means, and a battery. The detailed structure of the mobile station 116, 118 is known to one skilled in the art and will be described when relevant to the present invention.

One base transceiver station 108, 110 may serve one radio cell 112, 114 or a plurality of radio cells. Each radio cell 112, 114 is typically assigned a cell-specific radio frequency band selected from a plurality of radio frequency bands allocated to the TDMA cellular telecommunications system. The cell-specific radio frequency band defines the frequency range applied by the radio link 120, 122.

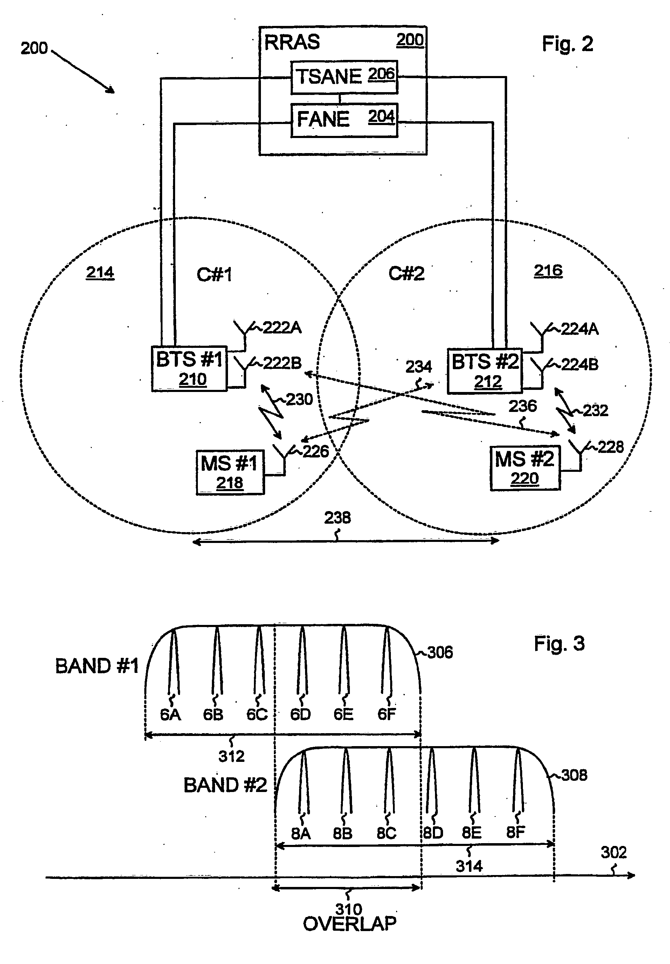

With reference to Figure 2, an apparatus (RRAS) 200 for allocating radio resources in the TDMA cellular telecommunications system includes a frequency allocating network element (FANE) 204 for allocating the radio frequency bands 306, 308 shown in Figure 3 to radio cells 214, 216.

The frequency allocating network element 204 may be located in the base station controller 104 or in the base transceiver station 210, 212, for example.

The frequency allocating network element 204 may be implemented with a computer and appropriate software.

In the example of Figure 2, a mobile station 218 (MS#1) is located within the coverage area of the radio cell 214 (C#1) and may have a radio link 230 with the base station 210 (BTS#1). The mobile station (MS#1) 218 may cause an interference signal 234 to the base transceiver station (BTS#2) 212.

The mobile station 220 (MS#2) is located within the coverage area of the radio cell 216 (C#2) and may have a radio link 232 with the base station 212 (BTS#2). A mobile station (MS#2) 220 may cause an interference signal 236 to the base transceiver station (BTS#1) 210.

The TDMA cellular telecommunications system according to the invention applies spatial diversity, which is typically achieved by applying a diversity antenna arrangement to the radio link 230, 232 between the base transceiver station 210, 212 and the mobile station 218, 220. The diversity antenna arrangement includes at least two independent antennas, which may be separated from each other by a physical distance and/or a polarization angle. The physical distance between proximity antennas is typically more than half of the wavelength of the radio frequency carrier. The diversity antenna arrangements are known to one skilled in the art and will be described when relevant to the present invention.

Each independent antenna is typically connected to an antenna-specific conversion chain, which performs a conversion between an antenna radio frequency signal and a base band digital signal. The conversion chain may be divided into a transmit chain and a receive chain.

The transmit chain typically converts a digital base band transmit signal into a radio frequency transmit signal, which is transmitted by the antenna. The structure of the transmit chain is known to one skilled in the art and is not discussed in detail in this context.

The receive chain typically converts a radio frequency receive signal received by the antenna into a digital base band receive signal. The structure of the receive chain is known to one skilled in the art and is not discussed in detail in this context.

In an embodiment, the diversity antenna arrangement is located in the base transceiver station 210, 212. In such a case, the mobile station 218, 220 may utilize a single antenna or a diversity antenna arrangement.

In an embodiment, the diversity antenna arrangement is located in the mobile station 218, 220. In such a case, the base transceiver station 210, 212 may utilize a single antenna or a diversity antenna arrangement.

In the example of Figure 2, the base transceiver station (BTS#1) 210 includes at least two independent antennas 222A, 222B, which are connected to antenna-specific transmit/receive chains not shown in Figure 2. The base transceiver station (BTS#2) 212 may include at least two independent antennas 224A, 224B, which are connected to antenna-specific transmit/receive chains not shown in Figure 2. Different base transceiver stations 210, 212 may have a different number of antenna elements.

In the example of Figure 2, the mobile station (MS#1) may include a single antenna 226. The mobile station (MS#2) may include a single antenna 228.

A reuse distance 238 is a prior art frequency planning parameter defined in the prior art, and it characterizes a minimum separation of radio cells which may apply the same frequencies simultaneously in the same transmission direction. It should be emphasized that the definition of the reuse distance 238 follows that of the conventional idea where a cellular telecommunications system does not apply spatial diversity, or spatial diversity is considered in a restricted manner in frequency planning. According to the prior art, non-overlapping radio frequency bands, such as the radio frequency bands 126, 128 shown in Figure 1B, would only be allocated to the radio cells 112, 114 located within the reuse distance 238.

In an embodiment, the radio cells 214, 216 are adjacent radio cells. In such a case, the reuse distance 238 is of the order of the cell size.

With reference to the example shown in Figure 3, a radio frequency band (BAND#1) 306 is allocated to the radio cell (C#1) 214. A radio frequency band (BAND#2) 308, correspondingly, is allocated to the radio cell (C#2) 216. The vertical axis 302 shows a radio frequency in an arbitrary unit.

The radio frequency band (BAND#1) 306 and the radio frequency band (BAND#2) 308 overlap, thus forming an overlap region 310. The overlap region 310 includes at least one frequency component, which is common to the radio cells 214, 216. The overlap region 310 is reserved for a simultaneous use in the same transmission direction of the radio cell (C#1) 214 and the radio cell (C#2) 216.

When the overlap region 310 is reserved for the simultaneous use in the same transmission direction of the radio cell (C#1) 210 and the radio cell (C#2) 212, at least a portion of the overlap region 310 may be dedicated to the radio link 230 and radio link 232, which apply the same time slots and have the same transmission direction. The transmission direction may be the downlink direction or the uplink direction, depending on the embodiment.

The radio frequency band (BAND#1) 306 may include carrier frequencies 6A, 6B, 6C, 6D, 6E, 6F, which may be equally separated from each other. The number of carrier frequencies 6A to 6F may depend on the required bandwidth 312 of the radio frequency band (BAND#1) 306 and the separation of the carrier frequencies 6A to 6F.

The radio frequency band (BAND#2) 308 may include carrier frequencies 8A, 8B, 8C, 8D, 8E, 8F, which may be equally separated from each other. The number of carrier frequencies 8A to 8F may depend on the required bandwidth 314 of the radio frequency band (BAND#2) 308 and the separation of the carrier frequencies 8A to 8F.

The carrier frequencies 6A to 6F and 8A to 8F may be the carrier frequencies of the GSM system, in which a typical separation of adjacent carrier frequencies is 200 kHz.

If the radio frequency bands 306, 308 are formed by carrier frequencies, the overlap region 310 includes at least one carrier frequency common to the radio frequency band (BAND#1) 306 and the rad io frequency band (BAND#2) 308. In the example of Figure 3, a group of carrier frequencies 6D, 6E, 6F of the radio frequency band (BAND#1) 306 overlaps a group of carrier frequencies 8A, 8B, 8C of the radio frequency band (BAND#2) 308 carrier by carrier. Thus, the carrier frequencies 6D, 6E, 6F are reserved for a simultaneous use for the cell (C#1) 214 and the cell (C#2) 216 in the same transmission direction.

The frequency allocating network element 204 may include a carrier register, which contains a list of carriers available for frequency allocation. The carriers may be associated with a carrier-specific carrier number. The carrier numbers may be signalled to the base transceiver station 210, 212 and to the mobile station 218, 220 in order to allocate the required carrier or carriers for the link 230, 232.

In an embodiment of the invention, the apparatus 200 includes a training sequence allocating network element (TSANE) 206 for allocating cell-specific training sequences to the at least two radio cells 214, 216. The cell-specific training sequences allow a receiver to distinguish between two transmitters transmitting simultaneously at the same frequency, and carry out e.g. channel estimation for a correct transmitter. With reference to Figure 2, the base transceiver station 210 and the mobile station 218 may be allocated a first training sequence. The base transceiver station 212 and the mobile station 220, respectively, may be allocated a second training sequence, which is different from the first training sequence. The use of the different training sequences enables the base transceiver station 210, 212 to distinguish between training sequences from the two mobile stations 218, 220 and associate the channel estimate with the correct mobile station 218, 220.

The training sequence allocating network element 206 may be comprised in the base station controller 104 or in the base transceiver station 108, 110. The training sequence allocating network element 206 may be implemented with a computer and software. The information on the applied training sequences may be transferred to the base transceiver stations 210, 212 and the mobile stations 218, 220 with known signalling channels.

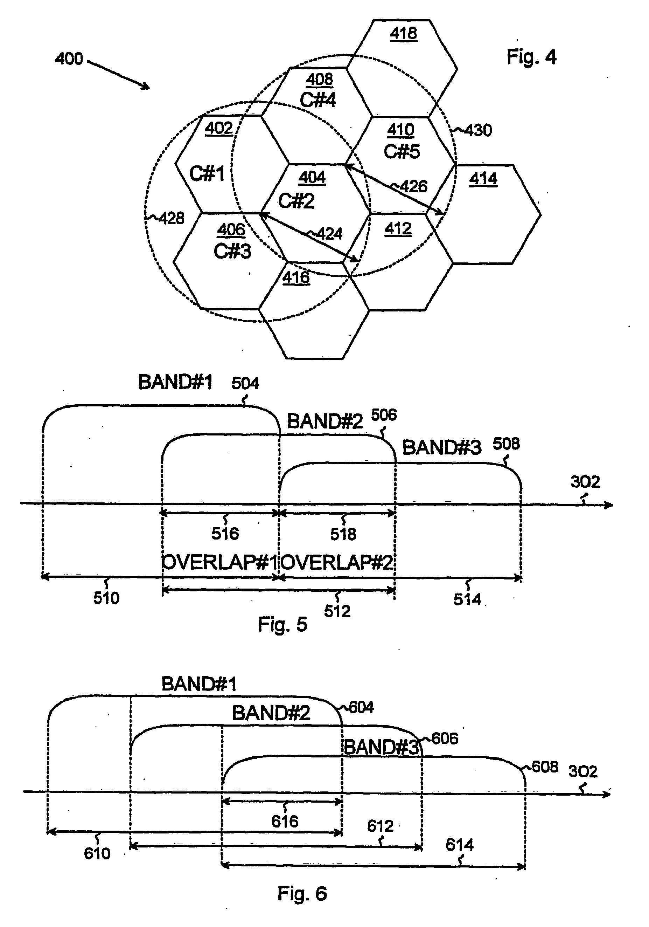

With reference to Figure 4, a TDMA cellular telecommunications system may include a radio cell structure 400, which includes radio cells 402 to 418. For the ease of illustration, the radio cell structure 400 is shown by means of a polygon model without restricting the invention to any shape or arrangement of radio cells, as is clear to one skilled in the art. Radio cells (C#1) 402, (C#2) 404, and (C#3) 406 may be formed by a single base transceiver station 210, 212 or cell-specific base transceiver stations 210, 212.

Let us consider an exemplary case where frequencies are allocated to the radio cells (C#1) 402, (C#2) 404, and (C#3) 406, which are located within a reuse distance 424 from each other. The reuse distance 424 may define a reuse area 428, such as a sphere. In this example, the cells (C#1) 402, (C#2) 404, and (C#3) 406 are included in the same reuse area 428.

According to the prior art, only separated frequency bands would be allocated to the radio cells (C#1) 402, (C#2) 404, and (C#3) 406 in the reuse area 428.

Another reuse area 430 including radio cells (C#2) 402, (C#4) 408, and (C#5) 410, for example, may be defined by a second reuse distance 426 elsewhere in the radio cell structure 400. Frequency allocation to the cells (C#2) 404, (C#4) 408, and (C#5) 410 within the reuse area 430 may be performed by using the principles described in connection with the reuse area 428 by taking into account the frequency allocation of the overlap cell (C#2) 404, which belongs to both reuse areas 428 and 430 under consideration. With the principle shown, the entire radio cell structure 400 of the TDMA cellular telecommunications system may be provided with radio frequencies.

With reference to Figure 5, in an embodiment, radio frequency bands (BAND#1) 504, (BAND#2) 506, and (BAND#3) 508 are allocated to radio cells (C#1) 402, (C#2) 404, and (C#3) 406, respectively. The radio frequency bands (BAND#1) 504, (BAND#2) 506, and (BAND#3) 508 span frequency ranges 510, 512, and 514, respectively.

In this case, the radio frequency band (BAND#1) 504 overlaps with the radio frequency band (BAND#2) 506, thus forming an overlap region (OVERLAP#1) 516. The overlap region (OVERLAP#1) 516 is reserved for a simultaneous use in the same transmission direction of the radio cell (C#1) 402 and radio cell (C#2) 404.

In an embodiment, the radio frequency band (BAND#2) 506 overlaps with the radio frequency band (BAND#3) 508, thus forming a second overlap region (OVERLAP#2) 518. The second overlap region (OVERLAP#2) 518 is reserved for a simultaneous use in the same transmission direction of the radio cell (C#2) 404 and radio cell (C#3) 406. The two overlap regions 516 and 518 may be reserved for the simultaneous use in the same transmission direction or they may be reserved for a non-simultaneous use.

The example of Figure 5 represents a case where each overlap region 516, 518 is associated with two radio frequency bands in maximum. If the radio frequency bands (BAND#1) 504, (BAND#2) 506, and (BAND#3) 508 are allocated in the uplink direction, the base transceiver station 210, 212 providing the cells 402, 404, 406 preferably applies at least two independent antenna elements 222A, 222B, 224A, 224B in reception. In this case, each overlap region 516, 518 may be reserved for the simultaneous use for two mobile stations 210, 212 in maximum operating in the same reuse area 428, each mobile station 210, 212 applying a single transmission antenna to the radio link.

In the case of the example of Figure 5, the reuse order, i.e. the number of radio frequency bands forming a single overlap region 516, 518, is two. The reuse order indicates the number of radio cells having the same overlap region, i.e. the number of radio links using the same frequencies and applied simultaneously in the same transmission direction. The example of Figure 5 shows that the overlap region 516, 518 results in increase in the bandwidths 510, 512, 514, and thus provides an improvement in the capacity within the reuse area 428. Furthermore, the maximum capacity in the cell level and link level is increased.

With reference to Figure 6, radio frequency bands (BAND#1) 604, (BAND#2) 606, and (BAND#3) 608 are allocated to the radio cells (C#1) 402, (C#2) 404, and (C#3) 406, respectively. The radio frequency bands (BAND#1) 604, (BAND#2) 606, and (BAND#3) 608 span the frequency ranges 610, 612, and 614, respectively. In this case, the radio frequency bands (BAND#1) 604, (BAND#2) 606, and (BAND#3) 608 form an overlap region 616, which includes frequency components from all three frequency bands 604, 606, 608. The overlap region 616 is reserved for the simultaneous use in the same transmission direction of the radio cells (C#1) 402, (C#2) 404, and (C#3) 406.

The example of Figure 6 represents a case where the overlap region 616 is formed by three radio frequency bands. If the radio frequency bands (BAND#1) 604, (BAND#2) 606, and (BAND#3) 608 are allocated in the uplink direction, the base transceiver station 210, 212 providing the cells 402, 404, 406 preferably applies at least three independent antenna elements 222A, 222B in reception. In this case, the overlap region 616 may be reserved for the simultaneous use in maximum of three mobile stations 210, 212 operating in the reuse area 428, each mobile station 210, 212 equipped with a single transmission antenna.

In the example of Figure 6, the reuse order is three, thus providing an increase in the bandwidths 610, 612, 614 when compared to the bandwidths 510, 512, 514 shown in Figure 5.

The frequency reuse order may be associated with the number of independent antennas applied in the base transceiver stations 210, 212 and mobile stations 210, 212. Let us denote the frequency reuse order R, the number of receive antennas in a receiver $N_R$, and the number of transmit antennas in a transmitter $N_T$. With the notation adopted, the following equation holds:

$$\frac{N_R}{N_T} \geq R. \qquad\qquad\qquad (1)$$

Equation (1) indicates that the number $N_R$ of receive antennas be more than the number of transmit antennas $N_T$ in order to enable more than one frequency band 306, 308 to be allocated to a radio cell 214, 216 for a simultaneous use in the same transmission direction.

Equation (1) indicates, for example, that with $N_R$=4 in the base transceiver station 210, 212 and $N_R$=1 in the mobile station 218, 220, four radio cells at maximum may use the same frequencies simultaneously in the same transmission direction. That is, four mobile stations 218, 210, each in a separate cell 214, 216, may transmit to the serving base transceiver station 210, 212 by using the same frequencies simultaneously. If $N_R$=2, the number of radio cells sharing the same frequency region would be two, and the number of mobile stations 218, 210 transmitting at the same frequency would be two.

Equation (1) may be applied to the downlink case. For example, if the number of antennas applied to the transmission in a base transceiver station is two, i.e. $N_T$=1, the minimum number of independent receive antennas in the mobile station is two, i.e. $N_R$=2 in order to allow a frequency reuse order greater than 1. In this case, the frequency reuse order is 2, i.e. R=2, thus allowing an overlap of two frequency bands 306, 308. That is, two base transceiver stations 210, 212 with the same reuse area may transmit simultaneously by using the same frequencies.

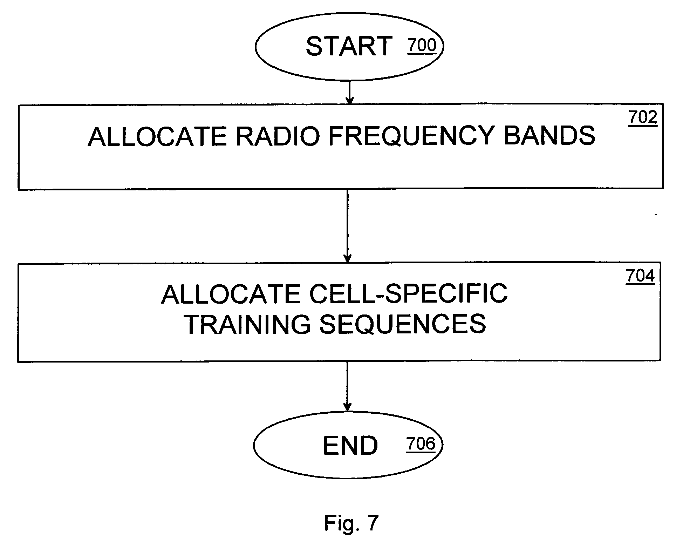

With reference to Figure 7, a methodology according to embodiments of the invention is described.

In 700, the method starts.

In 702, radio frequency bands 306, 308 are allocated to at least two radio cells 214, 216, the at least two radio cells 214, 216 being located within a reuse distance 238 from each other, at least one overlap region 310 being formed between the radio frequency bands 306, 308, the at least one overlap region 310 being reserved for the simultaneous use in the same transmission direction of the at least two radio cells 214, 216.

In 704, cell-specific training sequences are allocated to the at least two radio cells 214, 216.

In 706, the method ends.

In an embodiment of 702, the radio frequency bands 306, 308 are allocated to at least two adjacent radio cells.

In an embodiment of 702, the radio frequency bands 306, 308 are allocated to the at least two radio cells 214, 216, each radio frequency band 306, 308 including carrier frequencies, the overlap region 310 including at least one carrier frequency shared by the radio frequency bands 306, 308, the at least one carrier frequency being reserved for the simultaneous use in the same transmission direction of the at least two radio cells 214, 216.

In an embodiment of 702, the radio frequency bands 306, 308 are allocated to the at least two radio cells 214, 216, the overlap region 310 being reserved for the simultaneous use in the uplink direction of the at least two radio cells 214, 216.

In an embodiment of 702, the radio frequency bands 306, 308 are allocated to the at least two radio cells 214, 216, the overlap region 310 being reserved for the simultaneous use in the downlink direction of the at least two radio cells 214, 216.

In an aspect, the invention provides a computer program for executing a computer process shown in Figure 7 and described above.

The computer program may be stored in a data carrier, such as a CD (Compact Disc), a hard drive, a diskette, and a portable memory unit. The computer program may further be transferred with en electric signal in a data network, such as the Internet.

Even though the invention has been described above with reference to an example according to the accompanying drawings, it is clear that the invention is not restricted thereto but it can be modified in several ways within the scope of the appended claims.

**Claims**

1. A method of allocating radio resources in a TDMA cellular telecommunications system, which applies spatial diversity and where radio cells are assigned cell-specific radio frequency bands selected from a plurality of radio frequency bands, the method being **characterized by**
allocating (702) radio frequency bands to at least two radio cells, the at least two radio cells being located within a reuse distance from each other, which allocated radio frequency bands are located in such a way that the frequency bands form at least one overlap region which includes at least one frequency component, which is common to the radio cells,
reserving, the at least one overlap region for a simultaneous use in the same transmission direction of the at least two radio cells,
and allocating cell-specific training sequences to the at least two radio cells allowing a receiver to distinguish between two transmitters transmitting simultaneously at the same frequency.

2. The method of claim 1, **characterized by** allocating (702) the radio frequency bands to at least two adjacent radio cells.

3. The method of claim 1, **characterized by** allocating (702) the radio frequency bands to the at least two radio cells, each radio frequency band including carrier frequencies, the overlap region including at least one carrier frequency shared by the radio frequency bands, the at least one carrier frequency being reserved for the simultaneous use in the same transmission direction of the at least two radio cells.

4. The method of claim 1, **characterized by** allocating (702) the radio frequency bands to the at least two radio cells, the overlap region being reserved for the simultaneous use in the uplink direction of the at least two radio cells.

5. The method of claim 1, **characterized by** allocating (702) the radio frequency bands to the at least two radio cells, the overlap region being reserved for the simultaneous use in the downlink direction of the at least two radio cells.

6. An apparatus (200) for allocating radio resources in a TDMA cellular telecommunications system, which applies spatial diversity, and where radio cells are assigned cell-specific radio frequency bands selected from a plurality of radio frequency bands, the system being **characterized in that** the apparatus comprises allocating means (204) for allocating radio frequency bands (306, 308) to at least two radio cells (214, 216) located within a reuse distance (238) from each other, which allocated radio frequency bands are located in such a way that the frequency bands form at least one overlap region (310) which includes at least one frequency component, which is common to the radio cells, and for reserving the at least one overlap region (310) for a simultaneous use in the same transmission direction of the at least two radio cells (214, 216) and
allocating means (206) for allocating cell-specific training sequences to the at least two radio cells allowing a receiver to distinguish between two transmitters transmitting simultaneously at the same frequency.

7. The apparatus of claim 6, **characterized in that** the radio cells (214, 216) are adjacent radio cells.

8. The apparatus of claim 6, **characterized in that** the frequency allocating network element (204) is configured to allocate the radio frequency bands (306, 308) to the at least two radio cells (214, 216), each radio frequency band (306, 308) including carrier frequencies, the overlap region (310) including at least one carrier frequency shared by the radio frequency bands (306, 308), the at least one carrier frequency being reserved for the simultaneous use in the same transmission direction of the at least two radio cells (214, 216).

9. The apparatus of claim 6, **characterized in that** the transmission direction is the uplink direction.

10. The apparatus of claim 6, **characterized in that** the transmission direction is the downlink direction.

11. A computer program embodied in a computer readable medium, which computer program, when running on a computer, executes a computer process for allocating radio resources in a TDMA cellular telecommunications system which applies spatial diversity and where radio cells are assigned cell-specific radio frequency bands selected from a plurality of radio frequency bands, the computer process being **characterized in that** the computer process includes the step of allocating (402) radio frequency bands to at least two radio cells, the at least two radio cells being located within a reuse distance from each other, which allocated radio frequency bands are located in such a way that the frequency bands form at least one overlap region which includes at least one frequency component, which is common to the radio cells, reserving the at least one overlap region for a simultaneous use in the same transmission direction of the at least two radio cells and
the step of allocating cell-specific training sequences to the at least two radio cells allowing a receiver to distinguish between two transmitters transmitting simultaneously at the same frequency.

12. A computer program of claim 11, wherein the computer process is **characterized in that** the computer process includes the step of allocating (702) the radio frequency bands to at least two adjacent radio cells.

13. A computer program of claim 11, wherein the computer process is **characterized in that** the computer process includes the step of allocating (702) the radio frequency bands to the at least two radio cells, each radio frequency band including carrier frequencies, the overlap region including at least one carrier frequency common to the radio frequency bands, the at least one carrier frequency being reserved for the simultaneous use in the same transmission direction of the at least two radio cells.

14. A computer program of claim 11, wherein the computer process is **characterized in that** the computer process includes the step of allocating (702) the radio frequency bands to the at least two radio cells, the overlap region being reserved for the simultaneous use in the uplink direction of the at least two radio cells.

15. A computer program of claim 11, wherein the computer process is **characterized in that** the computer process includes the step of allocating (702) the radio frequency bands to the at least two radio cells, the overlap region being reserved for the simultaneous use in the downlink direction of the at least two radio cells.

**Patentansprüche**

1. Verfahren zum Zuteilen von Funkbetriebsmitteln in einem zellularen TDMA-Telekommunikationssystem, das Raum-Diversity anwendet und wo Funkzellen aus einer Mehrzahl von Hochfrequenzbändern ausgewählte zellenspezifische Hochfrequenzbänder zugewiesen werden, wobei das Verfahren **gekennzeichnet ist durch**
Zuteilen (702) von Hochfrequenzbändern zu mindestens zwei Funkzellen, wobei die mindestens zwei Funkzellen innerhalb eines Wiederverwendungsabstands voneinander angeordnet sind, wobei die zugeteilten Hochfrequenzbänder so angeordnet sind, dass die Frequenzbänder mindestens ein Überlappungsgebiet bilden, das mindestens eine Frequenzkomponente enthält, die den Funkzellen gemeinsam ist,
Reservieren des mindestens einen Überlappungsgebiets für eine gleichzeitige Verwendung in der gleichen Übertragungsrichtung der mindestens zwei Funkzellen,
und Zuteilen von zellenspezifischen Trainingssequenzen zu den mindestens zwei Funkzellen, wodurch einem Empfänger die Unterscheidung zwischen zwei gleichzeitig auf der gleichen Frequenz übertragenden Sendern erlaubt wird.

2. Verfahren nach Anspruch 1, **gekennzeichnet durch** Zuteilen (702) der Hochfrequenzbänder zu mindestens zwei benachbarten Funkzellen.

3. Verfahren nach Anspruch 1, **gekennzeichnet durch** Zuteilen (702) der Hochfrequenzbänder zu den mindestens zwei Funkzellen, wobei jedes Hochfrequenzband Trägerfrequenzen enthält, wobei das Überlappungsgebiet mindestens eine **durch** die Hochfrequenzbänder geteilte Trägerfrequenz enthält, wobei die mindestens eine Trägerfrequenz für die gleichzeitige Verwendung in der gleichen Übertragungsrichtung der mindestens zwei Funkzellen reserviert ist.

4. Verfahren nach Anspruch 1, **gekennzeichnet durch** Zuteilen (702) der Hochfrequenzbänder zu den mindestens zwei Funkzellen, wobei das Überlappungsgebiet für die gleichzeitige Verwendung in der Aufwärtsrichtung der mindestens zwei Funkzellen reserviert ist.

5. Verfahren nach Anspruch 1, **gekennzeichnet durch** Zuteilen (702) der Hochfrequenzbänder zu den mindestens zwei Funkzellen, wobei das Überlappungsgebiet für die gleichzeitige Verwendung in der Abwärtsrichtung der mindestens zwei Funkzellen reserviert ist.

**6.** Vorrichtung (200) zum Zuteilen von Funkressourcen in einem zellularen TDMA-Telekommunikationssystem, das Raum-Diversity anwendet und wo Funkzellen aus einer Mehrzahl von Hochfrequenzbändern ausgewählte zellenspezifische Hochfrequenzbänder zugewiesen werden, wobei das System **dadurch gekennzeichnet ist, dass** die Vorrichtung Zuteilungsmittel (204) zum Zuteilen von Hochfrequenzbändern (306, 308) zu mindestens zwei, innerhalb eines Wiederverwendungsabstands (238) voneinander angeordneten Funkzellen (214, 216) umfasst, wobei die zugeteilten Hochfrequenzbänder so angeordnet sind, dass die Frequenzbänder mindestens ein Überlappungsgebiet (310) bilden, das mindestens eine Frequenzkomponente enthält, die den Funkzellen gemeinsam ist, und zum Reservieren des mindestens einen Überlappungsgebiets (310) für eine gleichzeitige Verwendung in der gleichen Übertragungsrichtung der mindestens zwei Funkzellen (214, 216) und

Zuteilungsmittel (206) zum Zuteilen von zellenspezifischen Trainingssequenzen zu den mindestens zwei Funkzellen, wodurch einem Empfänger die Unterscheidung zwischen zwei gleichzeitig auf der gleichen Frequenz übertragenden Sendern erlaubt wird.

**7.** Vorrichtung nach Anspruch 6, **dadurch gekennzeichnet, dass** die Funkzellen (214, 216) benachbarte Funkzellen sind.

**8.** Vorrichtung nach Anspruch 6, **dadurch gekennzeichnet, dass** das Frequenzzuteilungsnetzelement (204) zum Zuteilen der Hochfrequenzbänder (306, 308) zu den mindestens zwei Funkzellen (214, 216) ausgeführt ist, wobei jedes Hochfrequenzband (306, 308) Trägerfrequenzen enthält, wobei das Überlappungsgebiet (310) mindestens eine durch die Hochfrequenzbänder (306, 308) geteilte Trägerfrequenz enthält, wobei die mindestens eine Trägerfrequenz für die gleichzeitige Verwendung in der gleichen Übertragungsrichtung der mindestens zwei Funkzellen (214, 216) reserviert ist.

**9.** Vorrichtung nach Anspruch 6, **dadurch gekennzeichnet, dass** die Übertragungsrichtung die Aufwärtsrichtung ist.

**10.** Vorrichtung nach Anspruch 6, **dadurch gekennzeichnet, dass** die Übertragungsrichtung die Abwärtsrichtung ist.

**11.** In einem computerlesbaren Medium verkörpertes Computerprogramm, das bei seinem Ablauf auf einem Computer ein Computerverfahren zum Zuteilen von Funkressourcen in einem zellularen TDMA-Telekommunikationssystem ausführt, das Raum-Diversity anwendet und wo Funkzellen aus einer Mehrzahl von Hochfrequenzbändern ausgewählte zellenspezifische Hochfrequenzbänder zugewiesen werden, wobei das Computerverfahren **dadurch gekennzeichnet ist, dass** das Computerverfahren den Schritt des Zuteilens (402) von Hochfrequenzbändern zu mindestens zwei Funkzellen enthält, wobei die mindestens zwei Funkzellen innerhalb eines Wiederverwendungsabstandes voneinander angeordnet sind, wobei die zugeteilten Hochfrequenzbänder so angeordnet sind, dass die Frequenzbänder mindestens ein Überlappungsgebiet bilden, das mindestens eine Frequenzkomponente enthält, die den Funkzellen gemeinsam ist, wobei das mindestens eine Überlappungsgebiet für eine gleichzeitige Verwendung in der gleichen Übertragungsrichtung der mindestens zwei Funkzellen reserviert wird, und

den Schritt des Zuteilens von zellenspezifischen Trainingssequenzen zu den mindestens zwei Funkzellen, was einem Empfänger die Unterscheidung zwischen zwei gleichzeitig auf der gleichen Frequenz übertragenden Sendern erlaubt.

**12.** Computerprogramm nach Anspruch 11, wobei das Computerverfahren **dadurch gekennzeichnet ist, dass** das Computerverfahren den Schritt des Zuteilens (702) der Hochfrequenzbänder zu mindestens zwei benachbarten Funkzellen enthält.

**13.** Computerprogramm nach Anspruch 11, wobei das Computerverfahren **dadurch gekennzeichnet ist, dass** das Computerverfahren den Schritt des Zuteilens (702) der Hochfrequenzbänder zu den mindestens zwei Funkzellen enthält, wobei jedes Hochfrequenzband Trägerfrequenzen enthält, wobei das Überlappungsgebiet mindestens eine den Hochfrequenzbändern gemeinsame Trägerfrequenz enthält, wobei die mindestens eine Trägerfrequenz für die gleichzeitige Verwendung in der gleichen Übertragungsrichtung der mindestens zwei Funkzellen reserviert ist.

**14.** Computerprogramm nach Anspruch 11, wobei das Computerverfahren **dadurch gekennzeichnet ist, dass** das Computerverfahren den Schritt des Zuteilens (702) der Hochfrequenzbänder zu den mindestens zwei Funkzellen enthält, wobei das Überlappungsgebiet für die gleichzeitige Verwendung in der Aufwärtsrichtung der mindestens zwei Funkzellen reserviert ist.

**15.** Computerprogramm nach Anspruch 11, wobei das Computerverfahren **dadurch gekennzeichnet ist, dass** das Computerverfahren den Schritt des Zuteilens (702) der Hochfrequenzbänder zu den mindestens zwei Funkzellen enthält, wobei das Überlappungsgebiet für die gleichzeitige Verwendung in der Abwärtsrichtung der mindestens zwei Funkzellen reserviert ist.

**Revendications**

1. Procédé d'attribution de ressources radio dans un système de télécommunications cellulaire AMRT, qui applique une diversité spatiale et où des cellules radio se voient attribuer des bandes de fréquences radio spécifiques aux cellules choisies parmi une pluralité de bandes de fréquences radio, le procédé étant **caractérisé par**
l'attribution (702) de bandes de fréquences radio à au moins deux cellules radio, les au moins deux cellules radio étant situées à une distance de réutilisation l'une par rapport à l'autre, lesquelles bandes de fréquences radio attribuées sont situées de telle manière que les bandes de fréquences forment au moins une région de chevauchement qui inclut au moins une composante de fréquence, qui est commune aux cellules radio,
la réserve de l'au moins une région de chevauchement pour une utilisation simultanée dans le même sens de transmission des au moins deux cellules radio,
et l'attribution de séquences d'apprentissage spécifiques aux cellules aux au moins deux cellules radio, permettant qu'un récepteur fasse la distinction entre deux émetteurs émettant simultanément à la même fréquence.

2. Procédé selon la revendication 1, **caractérisé par** l'attribution (702) des bandes de fréquences radio à au moins deux cellules radio adjacentes.

3. Procédé selon la revendication 1, **caractérisé par** l'attribution (702) des bandes de fréquences radio aux au moins deux cellules radio, chaque bande de fréquences radio incluant des fréquences de porteuse, la région de chevauchement incluant au moins une fréquence de porteuse partagée par les bandes de fréquences radio, l'au moins une fréquence de porteuse étant réservée pour l'utilisation simultanée dans le même sens de transmission des au moins deux cellules radio.

4. Procédé selon la revendication 1, **caractérisé par** l'attribution (702) des bandes de fréquences radio aux au moins deux cellules radio, la région de chevauchement étant réservée pour l'utilisation simultanée dans le sens de liaison montante des au moins deux cellules radio.

5. Procédé selon la revendication 1, **caractérisé par** l'attribution (702) des bandes de fréquences radio aux au moins deux cellules radio, la région de chevauchement étant réservée pour l'utilisation simultanée dans le sens de liaison descendante des au moins deux cellules radio.

6. Appareil (200) pour attribuer des ressources radio dans un système de télécommunications cellulaire AMRT, qui applique une diversité spatiale, et où des cellules radio se voient attribuer des bandes de fréquences radio spécifiques aux cellules choisies parmi une pluralité de bandes de fréquences radio, le système étant **caractérisé en ce que** l'appareil comprend un moyen d'attribution (204) pour attribuer des bandes de fréquences radio (306, 308) à au moins deux cellules radio (214, 216) situées à une distance de réutilisation (238) l'un par rapport à l'autre, lesquelles bandes de fréquences radio attribuées sont situées de telle manière que les bandes de fréquences forment au moins une région de chevauchement (310) qui inclut au moins une composante de fréquence, qui est commune aux cellules radio, et pour réserver l'au moins une région de chevauchement (310) pour une utilisation simultanée dans le même sens de transmission des au moins deux cellules radio (214, 216) et
un moyen d'attribution (206) pour attribuer des séquences d'apprentissage spécifiques aux cellules aux au moins deux cellules radio, permettant qu'un récepteur fasse la distinction entre deux émetteurs émettant simultanément à la même fréquence.

7. Appareil selon la revendication 6, **caractérisé en ce que** les cellules radio (214, 216) sont des cellules radio adjacentes.

8. Appareil selon la revendication 6, **caractérisé en ce que** l'élément de réseau d'attribution de fréquences (204) est configuré pour attribuer les bandes de fréquences radio (306, 308) aux au moins deux cellules radio (214, 216), chaque bande de fréquences radio (306, 308) incluant des fréquences de porteuse, la région de chevauchement (310) incluant au moins une fréquence de porteuse partagée par les bandes de fréquences radio (306, 308), l'au moins une fréquence de porteuse étant réservée pour l'utilisation simultanée dans le même sens de transmission des au moins deux cellules radio (214, 216).

**EP 1 719 378 B1**

9. Appareil selon la revendication 6, **caractérisé en ce que** le sens de transmission est le sens de liaison montante.

10. Appareil selon la revendication 6, **caractérisé en ce que** le sens de transmission est le sens de liaison descendante.

11. Programme informatique intégré dans un support lisible par un ordinateur, lequel programme informatique, lorsqu'il tourne sur un ordinateur, exécute un processus informatique pour attribuer des ressources radio dans un système de télécommunications cellulaire AMRT qui applique une diversité spatiale et où des cellules radio se voient attribuer des bandes de fréquences radio spécifiques aux cellules choisies parmi une pluralité de bandes de fréquences radio, le processus informatique étant **caractérisé en ce que** le processus informatique inclut l'étape d'attribution (402) de bandes de fréquences radio à au moins deux cellules radio, les au moins deux cellules radio étant situées à une distance de réutilisation l'une par rapport à l'autre, lesquelles bandes de fréquences radio attribuées sont situées de telle manière que les bandes de fréquences forment au moins une région de chevauchement qui inclut au moins une composante de fréquence, qui est commune aux cellules radio, réservant l'au moins une région de chevauchement pour une utilisation simultanée dans le même sens de transmission des au moins deux cellules radio et

l'étape d'attribution de séquences d'apprentissage spécifiques aux cellules aux au moins deux cellules radio, permettant qu'un récepteur fasse la distinction entre deux émetteurs émettant simultanément à la même fréquence.

12. Programme informatique selon la revendication 11, dans lequel le processus informatique est **caractérisé en ce que** le processus informatique inclut l'étape d'attribution (702) des bandes de fréquences radio à au moins deux cellules radio adjacentes.

13. Programme informatique selon la revendication 11, dans lequel le processus informatique est **caractérisé en ce que** le processus informatique inclut l'étape d'attribution (702) des bandes de fréquences radio aux au moins deux cellules radio, chaque bande de fréquences radio incluant des fréquences de porteuse, la région de chevauchement incluant au moins une fréquence de porteuse commune aux bandes de fréquences radio, l'au moins une fréquence de porteuse étant réservée pour l'utilisation simultanée dans le même sens de transmission des au moins deux cellules radio.

14. Programme informatique selon la revendication 11, dans lequel le processus informatique est **caractérisé en ce que** le processus informatique inclut l'étape d'attribution (702) des bandes de fréquences radio aux au moins deux cellules radio, la région de chevauchement étant réservée pour l'utilisation simultanée dans le sens de liaison montante des au moins deux cellules radio.

15. Programme informatique selon la revendication 11, dans lequel le processus informatique est **caractérisé en ce que** le processus informatique inclut l'étape d'attribution (702) des bandes de fréquences radio aux au moins deux cellules radio, la région de chevauchement étant réservée pour l'utilisation simultanée dans le sens de liaison descendante des au moins deux cellules radio.

PRIOR ART

| EXT | 100 | — | CN | 102 | — | BSC | 104 |

112   C#1

C#2   114

BTS #1
108

~120

BTS #2
110

~122

MS #1
116

MS #2
118

Fig. 1A

PRIOR ART

BAND #1  126

BAND #2  128

Fig. 1B

Fig. 2

200

RRAS                    200

TSANE 206

FANE    204

214          C#1                    C#2          216

222A
BTS #1         222B
210            230

234   BTS #2    224A
      212       224B
            236    232

MS #1    226
218

MS #2    228
220

238

Fig. 3

BAND #1                              306

6A    6B    6C    6D    6E    6F

312

BAND #2                              308

8A    8B    8C   8D    8E    8F

314

302

310
OVERLAP

Fig. 4

400

418

408
C#4

402

C#1

410
C#5

430

404
C#2

426

414

428

406
C#3

424

412

416

BAND#1    504

BAND#2    506

BAND#3    508

302

516          518

OVERLAP#1 OVERLAP#2

510          512          514

Fig. 5

BAND#1

BAND#2          604

BAND#3          606

608    302

616          612

610                          614

Fig. 6

14

START 700

ALLOCATE RADIO FREQUENCY BANDS    702

ALLOCATE CELL-SPECIFIC
TRAINING SEQUENCES    704

END 706

Fig. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2004006603 A

- WO 0239774 A